# EUROPÄISCHE PATENTSCHRIFT

(11) **EP 0 458 017 B1**
(45) Veröffentlichungstag und Bekanntmachung des Hinweises auf die Patenterteilung: **27.10.1993**
(21) Anmeldenummer: 91102750.6
(22) Anmeldetag: 25.02.1991
(51) Int. Cl.: C03B 37/027, C03B 23/047

(54) **Verfahren zum werkzeugfreien Umformen eines Hohlkörpers**
Method of reshaping a tube blank without tools
Procédé pour déformer un produit tubulaire sans outils

(30) Priorität: 18.05.1990 DE 4016030
(43) Veröffentlichungstag der Anmeldung: 27.11.1991
(73) Patentinhaber: Heraeus Quarzglas GmbH, D-63405 Hanau (DE)
(72) Erfinder: Leber, Helmut, Dr., W-6450 Hanau (DE); Reimann, Klaus, W-6458 Rodenbach 1 (DE)
(74) Vertreter: Kühn, Hans-Christian

(56) Entgegenhaltungen:
- EP-A- 0 163 071
- GB-A- 2 193 956
- PATENT ABSTRACTS OF JAPAN, unexamined applications, E Sektion, Band 1 Nr. 124, 18. Oktober 1977, The Patent Office Japanese Government, Seite 5273 E 77 & Kokai-Nr. 52-56 945 (Nippon Denki K.K.)

## Beschreibung

Die Erfindung betrifft ein Verfahren zum werkzeugfreien Umformen eines rohrförmigen Hohlkörpers aus amorphem, insbesondere glasigem Werkstoff zu einem Stab durch Kollabieren, wobei während des Kollabierens durch fortgesetztes Evakuieren ein Unterdruck unterhalb von Atmosphärendruck im rohrförmigen Teil aufrechterhalten wird, wobei der Hohlkörper kontinuierlich, unter vorgegebener Rotationsgeschwindigkeit, horizontal einer Erhitzungszone zugeführt und dort seine Viskosität so erniedrigt wird, daß infolge der Druckdifferenz zwischen dem Unterdruck und dem auf den Hohlkörper einwirkenden Außendruck, der Hohlkörper in einem Kollabier-Bereich zu dem Stab kollabiert und der Stab kontinuierlich, unter vorgegebener Rotationsgeschwindigkeit, aus dem Kollabier-Bereich abgezogen wird.

Derartige Verfahren sind allgemein bekannt und werden vorallem für das Kollabieren von Hohlzylindern aus dotiertem Quarzglas zur Herstellung von zylinderförmigen Vorformen für die Lichtwellenleitertechnik angewandt. Die Hohlzylinder werden beispielsweise durch flammenhydrolytische Abscheidung von Glaspartikeln auf einem Dorn, der zum Beispiel aus Glas, Graphit oder Aluminiumoxid bestehen kann, hergestellt, wobei ein offenporiger "Sootkörper" entsteht, der danach thermisch verdichtet wird. Die Entfernung des Dornes geschieht beispielsweise durch Herausbohren, Herausätzen oder Herausziehen. Um eine glatte und gleichmäßige Innen-Oberfläche zu erzielen, wird die Innenseite des Hohlzylinders vor dessen weiterer Verarbeitung im allgemeinen nachgehohnt oder nachpoliert. Zur Trocknung und Reinigung werden die Innen-Oberflächen der Hohlzylinder vor dem Kollabieren häufig mit fluor- oder chlorhaltigen Gasen behandelt, wie dies z.B. aus der FR-OS 2 441 594 bekannt ist, wobei leichtflüchtige Halogenide entfernt und die Oberflächen dadurch abgeätzt werden. Aufgrund ihrer chemischen Reaktionsfähigkeit greifen diese Reinigungs- und Trocknungsgase jedoch auch alle anderen Oberflächen, z.B. die des Ofens an und sind extrem giftig.

Aus der DE-PS 28 27 303 ist bekannt, daß der Kollabiervorgang dadurch erleichtert und beschleunigt wird, daß im Hohlzylinder ein Unterdruck angelegt wird. Da sich beim Kollabieren unter Unterdruck die Rohr-Wandungen aufgrund radial nach innen gerichteter, vom Unterdruck erzeugter Kräfte in der Kollabierzone beschleunigt aufeinander zubewegen, können zufällige Asymmetrien der Rohrgeometrie zu frühzeitigen, irreversiblen Berührungen sich gegenüberliegender Wandungen führen, wodurch eine Abflachung und Verzerrung im Kernbereich des Stabes auftreten kann. So ist beispielsweise in "Polarization characteristic of non-circular core single-mode fibers", V. Ramaswamy, W.G. French and R.D. Standley, Applied Optics, Vol. 17, No. 18, 1978, pages 3014 to 3017" beschrieben, daß ein hoher Unterdruck eine hantelförmige und ein geringer Unterdruck eine ovale Verformung des Kernbereiches verursacht. In der EP-PS 0 032 390 ist die Herstellung einer polarisationserhaltenden Lichtleitfaser mit ovalem Querschnitt des Kernbereiches beschrieben. Um die ovale Kernbereichs-Verformung zu erzielen, werden dabei in Hohlzylindern aus dotiertem Quarzglas, Außendurchmessern von ca. 20 mm und Innendurchmessern von ca. 17 mm, Unterdrücke von etwa -0,1 mbar bis -2 mbar gegenüber dem auf die Hohlzylinder einwirkenden Außendruck während des Kollabierens aufrechterhalten.

Bei den beschriebenen Verfahren wird die gesamte Innenoberfläche des Hohlzylinders nach dem Kollabieren auf das Zentrum des Massivzylinders abgebildet. Unvermeidliche Störungen der Innen-Oberfläche des Hohlzylinders durch Verunreinigungen, Feuchtigkeit, Oberflächendefekte oder dadurch, daß eine Oberflächenschicht stets eine andere Stöchiometrie aufweist als ein Massivmaterial, führen zu Inhomogenitäten im Zentrum des gebildeten Stabes. Dort sind sie im allgemeinen besonders störend.

Die Erfindung hat sich als Aufgabe gestellt, ein Verfahren bereitzustellen, um aus Hohlkörpern homogene, stabförmige Körper in einem Arbeitsgang, werkzeugfrei und kostengünstig herzustellen.

Erfindungsgemäß wird diese Aufgabe bei dem eingangs angegebenen Verfahren dadurch gelöst, daß Außenmaße und Innenmaße des Hohlkörpers, die Viskosität des glasigen Werkstoffes im Kollabier-Bereich, die Druckdifferenz zwischen dem Unterdruck und dem Außendruck, die Höhe des Unterdrucks, die Abziehgeschwindigkeit des Stabes und die Zuführgeschwindigkeit des Hohlkörpers sowie die Rotationsgeschwindigkeiten von Stab und Hohlkörper so gewählt werden, daß aus dem Kollabier-Bereich entgegen der Abziehrichtung des Stabes in der Achse des Hohlkörpers ein Stengel mit kleineren Querschnittsabmessungen als die des Stabes gebildet wird.

Dadurch, daß die Geometrie des Hohlkörpers und die Verfahrensparameter beim Kollabieren so eingestellt werden, daß aus dem Kollabier-Bereich in der Achse des Hohlkörpers ein Stengel entgegen der Abziehrichtung des kollabierten Stabes gebildet wird, wird ein vorzeitiges Zusammenklappen gegenüberliegender Innenwandflächen des Hohlkörpers, aufgrund vom Unterdruck verursachter, radial nach innen wirkender Kräfte und eine daraus resultierende Abflachung und Verzerrung des Kernbereiches verhindert. Der sich bildende Stengel stabilisiert somit unmittelbar vor dem Kollabier-Bereich die Symmetrie des schmelzenden Hohlkörpers und erleichtert deren Übertragung in den Stab. Gleichzeitig wird das Material der Innen-Oberflächenschicht des Hohlkörpers umgestülpt und im sich bildenden Stengel aus dem Kollabier-Bereich entfernt. Da das Zentrum des kollabierten Stabes somit kein Material enthält, das vorher einmal eine Oberfläche gebildet hatte, sind alle wesentlichen Störungen und Effekte, die auf Oberflächeneigenschaften beruhen, ausgeschlossen.

Zur Erzielung dieser Vorteile ist es gleichgültig, ob der Hohlkörper einer ortsfesten Erhitzungszone zugeführt oder in kinematischer Umkehr die Erhitzungszone über einen ortsfesten Hohlkörper hinweggeführt wird.

Besonders bewährt hat sich das erfindungsgemäße Verfahren für die Zuführung von Hohlzylindern. Dabei hat sich eine Hohlkörper-Geometrie als vorteilhaft erwiesen, bei der der Innendurchmesser zwischen 10 mm und 120 mm und das Verhältnis von Außen- zu Innendurchmesser im Bereich von 1,5 bis 3 liegt. Da der Kollabiervorgang möglichst schnell ablaufen sollte, wird die Temperatur in der Erhitzungszone vorzugsweise so hoch eingestelt, daß im Kollabier-Bereich eine Viskosität des glasigen Werkstoffes im Bereich von 10³ dPa·s bis 10⁷ dPa·s erzielt wird. Für den Unterdruck im Rohr, der mitbestimmend für die Geschwindigkeit, mit der der Stengel gebildet wird und für die für den Aufbau des Stengels aufgebrachte Werkstoffmasse ist, haben sich Werte bis maximal 1008 mbar als geeignet erwiesen, wobei die Druckdifferenz zwischen dem Unterdruck und dem auf den Hohlkörper wirkenden Außendruck mit Werten zwischen 5 mbar und 813 mbar zweckmäßig so gewählt wird, daß der Hohlkörper im Bereich der Erhitzungszone nicht unkontrolliert verformt wird. Um trotz einer genügenden Durchheizung des Werkstoffes und einer ausreichenden thermischen Stabilität im Kollabier-Bereich, dennoch einen wirtschaftlichen Massendurchsatz zu erreichen, hat sich eine Abziehgeschwindigkeit des Stabes aus dem Kollabier-Bereich zwischen 10 mm/min und 80 mm/min und eine Zuführgeschwindigkeit des Hohlkörpers zur Erhitzungszone zwischen 8 mm/min und 35 mm/min bewährt. Aufgrund der Rotation von Hohlkörper und Stab wird der Stengel im Zentrum des Hohlkörpers stabilisiert. Vorzugsweise wird die Rotationsgeschwindigkeit des Stabes auf einen Wert zwischen 0 U/min und maximal 30 U/min und die des Hohlkörpers auf einen Wert zwischen 10 U/min und 30 U/min eingestellt. Hohlkörper und Stab drehen sich dabei vorteilhafterweise in gleicher Richtung.

Um ungewollte Verformungen des Stabes zu verhindern, ist es vorteilhaft, Stab und Hohlkörper auf Zug zu halten, wobei die Zuführgeschwindigkeit des Hohlkörpers kleiner als die Abziehgeschwindigkeit des Stabes gewählt wird.

Um im Kollabier-Bereich eine ausreichende thermische Stabilität zu gewährleisten, hat sich eine Aufheizung von Hohlkörper und Stab mittels einer elektrischen Heizvorrichtung bewährt, insbesondere mittels eines Widerstandsofens, der den Kollabier-Bereich ringförmig und eng umschließt. Anstelle der bevorzugten elektrischen Beheizung kann auch eine Aufheizung von Hohlkörper und Stab mittels Gasbrennern zum Einsatz kommen, insbesondere dann, wenn kleine Hohlzylinderdimensionen vorliegen.

Um die Homogenität des Werkstoffes zu erhöhen, hat es sich als vorteilhaft erwiesen, Hohlkörper und Stab mit verschiedenen Geschwindigkeiten zu rotieren. Eventuell noch vorhandene Blasen können dabei in die Randbereiche des Stabes befördert werden.

Es hat sich als zweckmäßig erwiesen, den Stab nach dem Kollabieren zu tempern. Durch innere Spannungen verursachte Inhomogenitäten des Werkstoffes können dabei entfernt werden.

Das Verfahren hat sich vorallem bei der Verformung von Hohlkörpern aus Quarzglas bewährt, wobei die regelungstechnische Durchführung aufgrund der geringen Temperaturabhängigkeit der Viskosität von Quarzglas erleichtert wird.

Für die Verformung von Hohlzylindern aus Quarzglas haben sich für das erfindungsgemäße Verfahren folgende Parameter bewährt:
Es hat sich eine Hohlkörper-Geometrie als vorteilhaft erwiesen, bei der der Innendurchmesser zwischen 40 mm und 100 mm und das Verhältnis von Außen- zu Innendurchmesser im Bereich von 1,7 bis 3 liegt. Da der Kollabiervorgang möglichst schnell ablaufen sollte, wird die Temperatur in der Erhitzungszone vorzugsweise so eingesteltt, daß im Kollabier-Bereich eine Viskosität des glasigen Werkstoffes im Bereich von 10⁴ dPa · s bis 10⁷ dPa · s erzielt wird. Für den Unterdruck im Rohr, der mitbestimmend für die Geschwindigkeit, mit der der Stengel gebildet wird und für die für den Aufbau des Stengels aufgebrachte Werkstoffmasse ist, haben sich Werte bis maximal 993 mbar als geeignet erwiesen, wobei die Druckdifferenz zwischen dem Unterdruck und dem auf den Hohlkörper wirkenden Außendruck mit Werten zwischen 20 mbar und 813 mbar zweckmäßig so klein gewählt wird, daß der Hohlkörper im Bereich der Erhitzungszone nicht unkontrolliert verformt wird. Um trotz einer genügenden Durchheizung des Werkstoffes und einer ausreichenden thermischen Stabilität im Kollabier-Bereich, dennoch einen wirtschaftlichen Massendurchsatz zu erreichen, hat sich eine Abziehgeschwindigkeit des Stabes aus dem Kollabier-Bereich zwischen 15 mm/min und 80 mm/min und eine Zuführgeschwindigkeit des Hohlkörpers zur Erhitzungszone zwischen 12 mm/min und 29 mm/min bewährt. Aufgrund der Rotation von Hohlkörper und Stab wird der Stengel im Zentrum des Hohlkörpers stabilisiert. Vorzugsweise beträgt die Rotationsgeschwindigkeit des Stabes maximal 30 U/min und die des Hohlkörpers liegt auf einem Wert zwischen 10 U/min und 30 U/min.

Um die Homogenität des Werkstoffes zu erhöhen, hat es sich als vorteilhaft erwiesen, Hohlkörper und Stab mit verschiedenen Geschwindigkeiten zu rotieren. Eventuell noch vorhandene Blasen können dabei in die äußeren Stabbereiche befördert werden.

Das erfindungsgemäße Verfahren wird anhand einer schematischer Darstellung nachfolgend beispielhaft beschrieben.

Mit der Bezugsziffer 12 ist eine elektrische Widerstandsheizung bezeichnet, die die Erhitzungszone 1 umhüllt, die einen Abschnitt eines zu kollabierenden Quarzglasrohres 2 und eines bereits kollabierten Stabes 3 umschließt. Innerhalb der Erhitzungszone 1 fallen die Innenwandungen 4 des Quarzglasrohres 2 in einem Kollabier-Bereich 5 zusammen, wobei ein Stengel 6 gebildet und entgegen der Abziehrichtung des Stabes 3 aus dem Kollabier-Bereich 5 abgezogen wird.

Die Abziehrichtung des Stabes 3 ist mit dem Richtungspfeil 7, die des Stengels mit dem Richtungspfeil 8 gekennzeichnet. Das Quarzglasrohr 2 ist an seiner, dem Kollabier-Bereich 5 abgewandten Stirnseite mit einem Stopfen 10 verschlossen. Innerhalb des Quarzglasrohres 2 wird während des Umformens ein Unterdruck von 900 mbar mittels einer Vakuumpumpe 9 gehalten, die über eine vakuumdichte Durchführung durch den Stopfen 10 an das Quarzglasrohr 2 angeschlossen ist. Das Quarzglasrohr 2, das einen Außendurchmesser von 120 mm und einen Innendurchmesser von 60 mm aufweist, wird horizontal orientiert und unter kontinuierlicher Rotation von 20 U/min mit einer Zuführgeschwindigkeit von 23 mm/min der Erhitzungszone 1 zugeführt und dort auf eine Temperatur von 2100°C aufgeheizt. Im Kollabier-Bereich 5 hat das Quarzglas dabei eine mittlere Viskosität von 10⁵ dPa · s. Während des Kollabierens hält die Vakuumpumpe 9 im Quarzglasrohr 2 einen Unterdruck von 900 mbar aufrecht, so daß gegenüber dem außen an der Quarzglasrohr-Oberlfäche anliegenden Atmosphärendruck eine Druckdifferenz von 113 mbar erhalten bleibt. Die Abziehgeschwindigkeit des Stabes 3 beträgt 23,5 mm/min und ist damit geringfügig höher als die Zuführgeschwindigkeit des Quarzglasrohres 2. Dadurch werden das Quarzglasrohr 2 und der Quarzglas-Stab 3 ständig auf Zug gehalten. Die Stab-Rotationsgeschwindigkeit ist mit 5 U/min, etwas niedriger gewählt als die des Quarzglasrohres 2 wodurch im Kollabier-Bereich 5 eine innige Vermischung und Homogenisierung des Quarzglases erreicht wird.

Aufgrund der oben angeführten Versuchsparameter bildet sich in der Achse des Quarzglasrohres 2 ein Stengel 6 aus, der sich aus Material aus den oberflächennahen Bereichen 11 der Innenwandungen 4 des Quarzglasrohres 2 zusammensetzt, die im Kollabier-Bereich 5 eine so niedrige Viskosität haben, daß sie von den in Achsrichtung, entgegen der Abziehrichtung des Stabes 3 wirkenden und an der Stengelstirnfläche 13 angreifenden Druck- bzw. Vakuumkräften verformt und in Richtung des Stengelwachstums 8 umgestülpt werden. Mit dem Stengel 6 werden somit die Verschmutzungen und Störungen der oberflächennahen Bereiche 11 aus dem Kollabier-Bereich 5 entfernt. Außerdem wird durch die Ausbildung des Stengels 6 ein Zusammenfallen gegenüberliegender Innenwandungen 4 des Quarzglasrohres 2 verhindert und damit die Symmetrie des Quarzglasrohres 2 unmittelbar vor dem Kollabier-Bereich 5 stabilisiert und in den Stab 2 übertragen.

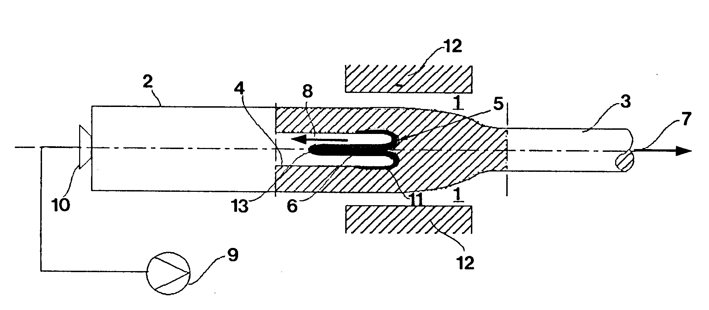

## Patentansprüche

1. Verfahren zum werkzeugfreien Umformen eines rohrförmigen Hohlkörpers (2) aus amorphem, insbesondere glasigem Werkstoff zu einem Stab (3) durch Kollabieren, wobei während des Kollabierens durch fortgesetztes Evakuieren ein Unterdruck unterhalb von Atmosphärendruck im rohrförmigen Teil aufrechterhalten wird, wobei der Hohlkörper (2) kontinuierlich, unter vorgegebener Rotationsgeschwindigkeit, horizontal einer Erhitzungszone (1) zugeführt und dort seine Viskosität so erniedrigt wird, daß infolge der Druckdifferenz zwischen dem Unterdruck und dem auf den Hohlkörper (2) einwirkenden Außendruck, der Hohlkörper (2) in einem Kollabier-Bereich (5) zu dem Stab (3) kollabiert und der Stab (3) kontinuierlich, unter vorgegebener Rotationsgeschwindigkeit, aus dem Kollabier-Bereich (5) abgezogen wird, dadurch gekennzeichnet, daß Außenmaße und Innenmaße des Hohlkörpers (2), die Viskosität des glasigen Werkstoffes im Kollabier-Bereich (5), die Druckdifferenz zwischen dem Unterdruck und dem Außendruck, die Höhe des Unterdrucks, die Abziehgeschwindigkeit des Stabes (3) und die Zuführgeschwindigkeit des Hohlkörpers (2) sowie die Rotationsgeschwindigkeiten von Stab (3) und Hohlkörper (2) so gewählt werden, daß aus dem Kollabier-Bereich (5) entgegen der Abziehrichtung des Stabes (3) in der Achse des Hohlkörpers (2) ein Stengel (6) mit kleineren Querschnittsabmessungen als die des Stabes (3) gebildet wird.

2. Verfahren nach Anspruch 1, dadurch gekennzeichnet, daß zylindrische Hohlkörper (2) mit einem Innendurchmesser im Bereich von 10 mm bis 120 mm, wobei das Verhältnis von Außen- zu Innendurchmesser im Bereich von 1,5 bis 3 liegt, umgeformt werden, daß die Viskosität des Werkstoffs im Kollabier-Bereich (5) auf einen Wert im Bereich von 10³ dPa.s bis 10⁷ dPa.s eingestellt wird, daß der Unterdruck im Hohlkörper (2) auf einem Wert von maximal 1008 mbar gehalten und die Druckdifferenz auf einem Wert im Bereich von 5 bis 813 mbar eingestellt wird, daß die Abziehgeschwindigkeit des Stabes (3) auf einem Wert im Bereich zwischen 10 mm/min und 80 mm/min und die Zuführgeschwindigkeit des Hohlkörpers (2) auf einem Wert im Bereich zwischen 8 mm/min und 35 mm/min eingestellt werden, daß der Stab (3) mit einer Geschwindigkeit zwischen 0 U/min und maximal 30 U/min und der Hohlkörper (2) mit einer Geschwindigkeit im Bereich von 10 U/min bis 30 U/min um ihre Längsachse gedreht werden.

3. Verfahren nach Anspruch 1 oder 2, dadurch gekennzeichnet, daß der Stab (3) und der Hohlkörper (2) auf Zug gehalten werden.

4. Verfahren nach einem der Ansprüche 1 bis 3, dadurch gekennzeichnet, daß der Hohlkörper (2) und der Stab (3) mit verschiedenen Geschwindigkeiten rotiert werden.

5. Verfahren nach einem der Ansprüche 1 bis 4, dadurch gekennzeichnet, daß der Stab (3) getempert wird.

6. Verfahren nach einem der Ansprüche 1 bis 5, dadurch gekennzeichnet, daß der Hohlkörper (2) und der Stab (3) im Bereich der Erhitzungszone (1) mittels einer elektrischen Heizvorrichtung (12) erwärmt werden.

7. Verfahren nach Anspruch 6, dadurch gekennzeichnet, daß die Erhitzungszone (1) von einem Widerstandsofen (12) umhüllt wird.

8. Verfahren nach einem der Ansprüche 1 bis 7, dadurch gekennzeichnet, daß Hohlkörper (2) verwendet werden, die im wesentlichen aus Quarzglas bestehen.

9. Verfahren nach Anspruch 8, dadurch gekennzeichnet, daß zylindrische Hohlkörper (2) mit einem Innendurchmesser im Bereich von 40 mm bis 100 mm, wobei das Verhältnis von Außen- zu Innendurchmesser im Bereich von 1,7 bis 3 liegt, umgeformt werden, daß die Viskosität des Werkstoffs im Kollabier-Bereich (5) auf einen Wert im Bereich von 10⁴ dPa.s bis 10⁷ dPa.s eingestellt wird, daß der Unterdruck im Hohlkörper (2) auf einem Wert von maximal 993 mbar gehalten und die Druckdifferenz auf einem Wert in Bereich von 20 mbar bis 813 mbar eingestellt wird, daß die Abziehgeschwindigekeit des Stabes (3) zwischen 15 mm/min und 80 mm/min und die Zuführgeschwindigkeit des Hohlkörpers (2) zwischen 12 mm/min und 29 mm/min eingestellt werden, daß der Stab mit maximal 30 U/min und der Hohlkörper (2) mit einer Geschwindigkeit im Bereich von 10 U/min bis 30 U/min um ihre Längsachse gedreht werden.

## Claims

1. Process for converting without tools a hollow tubular body (2) made of amorphous, especially vitreous, material into a rod (3) by collapsing, wherein during collapsing an under-pressure below atmospheric pressure is maintained in the tubular portion by continued evacuation, the hollow body (2) is continuously fed, horizontally and with a given speed of rotation, to a heating zone (1) where its viscosity is reduced to such an extent that owing to the pressure difference between the under-pressure and the external pressure acting upon the hollow body (2) the hollow body (2) is collapsed into the rod (3) in a region of collapse (5) and the rod (3) is continuously withdrawn from the region of collapse (5) with a given speed of rotation, characterised in that the external and internal dimensions of the hollow body (2), the viscosity of the vitreous material in the region of collapse (5), the pressure difference between the under-pressure and the external pressure, the level of the under-pressure, the speed of withdrawal of the rod (3) and the speed at which the hollow body (2) is fed, as well as the speeds of rotation of the rod (3) and of the hollow body (2), are selected such that a stalk (6) with cross-sectional dimensions smaller than those of the rod (3) is formed along the axis of the hollow body (2), extending from the region of collapse (5) in a direction opposite to that in which the rod (3) is withdrawn.

2. Process according to Claim 1, characterised in that cylindrical hollow bodies (2) with an internal diameter ranging from 10 mm to 120 mm are worked, whereof the ratio of external to internal diameter ranges from 1.5 to 3, in that the viscosity of the material in the region of collapse (5) is set at a value ranging from 10³ dPa.s to 10⁷ dPa.s, in that the under-pressure in the hollow body (2) has a maximum value of 1008 mbar and the difference in pressure is set at a value ranging from 5 to 813 mbar, in that the speed of withdrawal of the rod (3) is set at a value between 10 mm/min and 80 mm/min and the speed at which the hollow body (2) is fed is set at a value between 8 mm/min and 35 mm/min, and in that the rod (3) is rotated at a speed between 0 r.p.m. and 30 r.p.m. maximum and the hollow body (2) is rotated at a speed ranging from 10 r.p.m. to 30 r.p.m. about its longitudinal axis.

3. Process according to Claim 1 or 2, characterised in that the rod (3) and the hollow body (2) are held in tension.

4. Process according to one of Claims 1 to 3, characterised in that the hollow body (2) and the rod (3) are rotated at different speeds.

5. Process according to one of Claims 1 to 4, characterised in that the rod (3) is tempered.

6. Process according to one of Claims 1 to 5, characterised in that the hollow body (2) and the rod (3) are heated in the region of the heating zone (1) by an electric heater (12).

7. Process according to Claim 6, characterised in that the heating zone (1) is enclosed by an electrical resistance furnace (12).

8. Process according to one of Claims 1 to 7, characterised in that hollow bodies (2) are used which are composed essentially of quartz glass.

9. Process according to Claim 8, characterised in that cylindrical hollow bodies (2) with an internal diameter ranging from 40 mm to 100 mm are worked, whereof the ratio of external to internal diameter ranges from 1.7 to 3, in that the viscosity of the material in the region of collapse (5) is set at a value ranging from 10⁴ dPa.s to 10⁷ dPa.s, in that the under-pressure in the hollow body (2) has a maximum value of 993 mbar and the difference in pressure is set at a value ranging from 20 mbar to 813 mbar, in that the speed of withdrawal of the rod (3) is set at between 15 mm/min and 80 mm/min and the speed at which the hollow body (2) is fed is set at between 12 mm/min and 29 mm/min, and in that the rod is rotated at a maximum speed of 30 r.p.m. and the hollow body (2) is rotated about its longitudinal axis at a speed ranging from 10 r.p.m. to 30 r.p.m..

## Revendications

1. Procédé pour déformer sans outil un corps creux (2) tubulaire de matériau amorphe, notamment vitreux, en un barreau (3) par rétreinte, selon lequel, pendant la rétreinte, on maintient une dépression au-dessous de la pression atmosphérique dans la pièce tubulaire par la poursuite de l'évacuation, selon lequel on amène le corps creux (2) horizontalement et de façon continue, pendant qu'il est animé d'une vitesse de rotation préfixée, à une zone d'échauffement (1), où on réduit sa viscosité de manière que, par suite de la différence de pression entre la dépression et la pression extérieure agissant sur le corps creux (2), celui-ci soit rétreint en barreau (3) dans une région de rétreinte (5), et selon lequel on évacue le barreau (3) de façon continue, par traction, de la région de rétreinte (5), pendant qu'il est animé d'une vitesse de rotation préfixée, caractérisé en ce que l'on choisit les dimensions extérieures et les dimensions intérieures du corps creux (2), la viscosité du matériau vitreux dans la région de rétreinte (5), la différence de pression entre la dépression et la pression extérieure, la valeur de la dépression, la vitesse d'évacuation du barreau (3) et la vitesse d'amenée du corps creux (2), ainsi que les vitesses de rotation du barreau (3) et du corps creux (2), de manière qu'une tige (6), ayant de plus petites dimensions en section droite que celles du barreau (3), soit formée, dans l'axe du corps creux (2), à partir de la région de rétreinte (5) et en sens contraire à la direction d'évacuation du barreau (3).

2. Procédé selon la revendication 1, caractérisé en ce que l'on déforme des corps creux cylindriques (2) ayant un diamètre intérieur de 10 mm à 120 mm, le rapport du diamètre extérieur au diamètre intérieur étant de 1,5 à 3, que l'on ajuste la viscosité du matériau dans la région de rétreinte (5) à une valeur de 10³ dPa.s à 10⁷ dPa.s, que l'on maintient la dépression dans le corps creux (2) à une valeur de tout au plus 1008 mbars et on ajuste la différence de pression à une valeur de 5 à 813 mbars, que l'on ajuste la vitesse d'évacuation du barreau (3) à une valeur entre 10 mm/min et 80 mm/min et la vitesse d'amenée du corps creux (2) à une valeur entre 8 mm/min et 35 mm/min, et que l'on fait tourner le barreau (3) à une vitesse entre 0 t/min et tout au plus 30 t/min et le corps creux (2) à une vitesse de 10 t/min à 30 t/min autour de leurs axes longitudinaux.

3. Procédé selon la revendication 1 ou 2, caractérisé en ce que l'on maintient le barreau (3) et le corps creux (2) sous traction.

4. Procédé selon une des revendications 1 à 3, caractérisé en ce que l'on fait tourner le corps creux (2) et le barreau (3) à des vitesses différentes.

5. Procédé selon une des revendications 1 à 4, caractérisé en ce que l'on soumet le barreau (3) à un recuit.

6. Procédé selon une des revendications 1 à 5, caractérisé en ce que lon échauffe le corps creux (2) et le barreau (3), dans la région de la zone d'échauffement (1), au moyen d'un dispositif de chauffage électrique (12).

7. Procédé selon la revendication 6, caractérisé en ce que la zone d'échauffement (1) est enveloppée d'un four à résistance (12).

8. Procédé selon une des revendications 1 à 7, caractérisé en ce que l'on utilise des corps creux (2) formés essentiellement de verre de silice.

9. Procédé selon la revendication 8, caractérisé en ce que l'on déforme des corps creux cylindriques (2) ayant un diamètre intérieur de 40 mm à 100 mm, le rapport du diamètre extérieur au diamètre intérieur étant de 1,7 à 3, que l'on ajuste la viscosité du matériau dans la région de rétreinte (5) à une valeur de 10⁴ dPa.s à 10⁷ dPa.s, que l'on maintient la dépression dans le corps creux (2) à une valeur de tout au plus 993 mbars et on ajuste la différence de pression à une valeur de 20 mbars à 813 mbars, que l'on ajuste la vitesse d'évacuation du barreau (3) entre 15 mm/min et 80 mm/min et la vitesse d'amenée du corps creux (2) entre 12 mm/min et 29 mm/min et que l'on fait tourner le barreau à tout au plus 30 t/min et le corps creux (2) à une vitesse entre 10 t/min et 30 t/min autour de leurs axes longitudinaux.
